# EUROPEAN PATENT SPECIFICATION

(11) **EP 0 641 158 B1**
(45) Date of publication and mention of the grant of the patent: **04.12.1996**
(21) Application number: 93909825.7
(22) Date of filing: 13.05.1993
(51) Int. Cl.: A01K 1/015

(54) **FLOORING SYSTEM**
FUSSBODENSYSTEM
SYSTEME DE PLANCHER

(30) Priority: 13.05.1992 DK 629/92
(43) Date of publication of application: 08.03.1995
(73) Proprietor: IKADAN SYSTEM A/S, DK-7430 Ikast (DK)
(72) Inventor: KONGSGAARD, Bjarne, DK-7430 Ikast (DK)
(74) Representative: Kyed, Iver
(86) International application number: DK9300161
(87) International publication number: WO9322905

(56) References cited:
- EP-A- 0 396 881
- EP-A- 0 472 206

## Description

The present invention relates to a flooring system, mainly for supports for farm animals in stables, consisting of plate-shaped frames, preferably grates, which have crossing longitudinal and transverse ribs, one pair of opposite lateral edges of a frame being equipped with horizontal connecting means, and the other pair of opposite lateral edges being equipped with toothings which are able to interact with corresponding toothings on the lateral edge of an adjacent frame, and which toothing comprises a U-shaped track pointing downwards for placing in a supporting rail so that the frames are able, when placed adjacently, to form a flooring with an unbroken surface and at the same time are connected horizontally and vertically.

Such flooring is known from the German Gebrauchsmuster 8009170.9. The floorings disclosed therein are made up of frames which are equipped with a toothing on one pair of opposite sides. The spaces and tips of the toothings are equipped with recesses and corbels in order to form an almost unbroken surface, so that it will be nearly impossible to take out an individual frame from the centre of a constructed floor. This is important when the frames are used in buildings for farm animals.

Another flooring is described in EP-A-0.472.206. The flooring system disclosed therein describes a frame which is equipped with toothings offset from one another on opposite sides. Each toothing is on the tip provided with a bead forming an anti scid flooring system. This flooring system does not describe means to make it almost impossible to take out an individual frame in the centre of a constructed flooring, and the molding form and procedure is disadvantageous because of the amount of material at the tip of the tooth making the bead.

It is the object of the present invention to provide a flooring of the type mentioned initially, which presents the same advantages, and which provides an improved safety against unintended removal of a frame from the centre of the floor, and which is at the same time easy to produce in a moulding form.

According to the present invention this is obtained by a flooring which is characterized in that said downward track is delimited by the under side of each projected tooth and two lateral walls, the first of which consisting in a downward wall which is connected to the tip of each tooth and which is perpendicular to the tooth, and the second lateral wall consisting in the lateral faces of the frame or in flanges which are projecting from such a lateral face, and that said first lateral wall, at the end facing the tip of the tooth, extends beyond the tip of the tooth in a direction parallel with the track.

At the tip of each tooth, a projected edge is formed by the first side wall's upper sides which extend beyond the tip. These projected edges are able to interlock under the innermost edges of a tooth on a corresponding frame placed adjacently in order to form the flooring. Hereby an unintended removal of a frame in the centre of a flooring will be made difficult or even impossible. Since each lateral wall extends beyond the tip of the tooth, a contact surface is formed at the upper side of the first lateral wall, which contact surface will engage with the under side of the teeth which delimit a tooth space into which a tooth in question is inserted. These upper sides or contact surfaces will be formed at either side of the track and will thus cause an interlocking of both adjacent frames to be obtained.

With an advantageous embodiment as described in claim 2, a relatively large contact surface may be obtained at the upper side of the lateral wall, and increased safety against unintended removal of a frame is obtained. Because of the tapering, a snap device will make it possible to press the teeth into tooth spaces although the lateral walls are wider than the actual distance between the lateral edges of the adjacent teeth.

The frame is easy to manufacture by moulding of resin material since the plane of the lateral wall upper sides which form the contact surfaces will be provided in the same moulding plane as the under side of the toothings. Thus the frames may be moulded in a very simple moulding form.

It should be noted that the flooring system is primarily intended for use in stables and particularly in pigsties where increased safety against unintended removal of the flooring has to be provided. However, the flooring may also be applied elsewhere, e.g. in tents and caravans where it is desirable to provide a firm flooring in an easy and simple way. Due to the toothings and the efficient interlocking established according to the present invention, such a flooring is able to form a plane floor with a very plane surface where there is no risk that the planeness of the flooring will be broken even under heavy loads along the lateral edges of any frame.

At the lateral edges placed opposite the toothed lateral edges, the individual frames are equipped with any connecting means which may be known per se and which provide a vertical interlocking of two adjacent frames. Thus these elements may consist of projecting pins on one lateral edge and corresponding grooves or holes in the opposite lateral edge.

### DESCRIPTION OF THE DRAWINGS

The invention will now be further explained with reference to the accompanying drawing, wherein
- Fig. 1: shows a perspective view of a frame for a flooring according to the invention,
- Fig. 2: a fragmentary partial view, seen from above, of a frame for a flooring,
- Fig. 3: a view, seen from aside, of the fragment shown in Fig. 2 and
- Fig. 4: a view, seen from the end, of the fragment shown in Figs. 2 and 3.

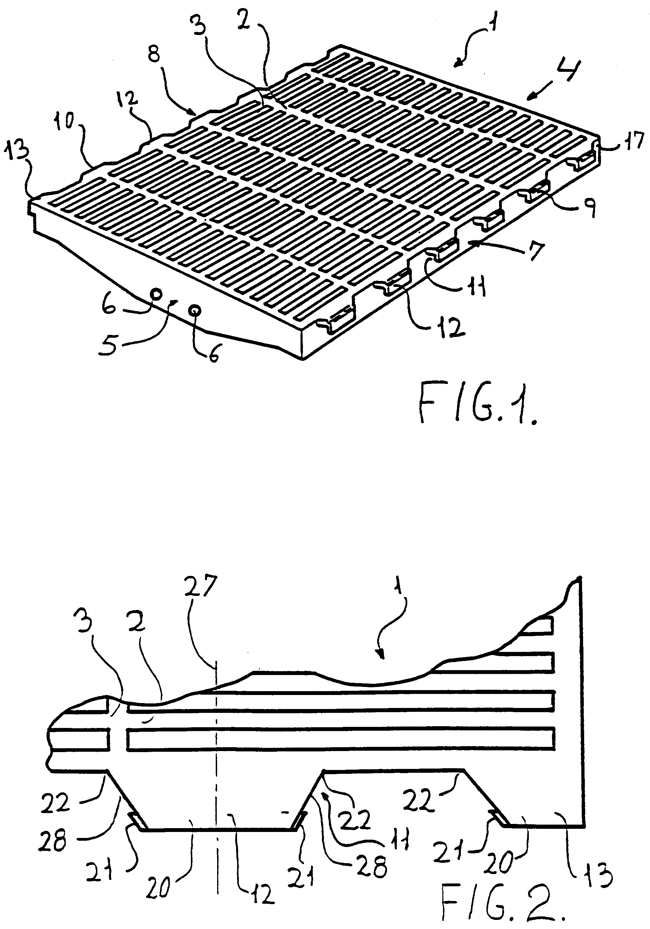

Fig. 1 shows a frame 1 in the form of a grate intended as a support surface for pigs. Other embodiments of the frame are possible. The grate 1 is equipped with crossing longitudinal and transverse ribs 2, 3. Horizontal connection means 6 are formed on two opposite lateral edges 4,5. The illustrated connection means 6 consist of perforations of the lateral edge 5 which interacts with projecting pins (not shown) at the opposite lateral edge 4.

The other two opposite lateral edges 7,8 are equipped with toothings 9,10. The toothings 9,10 are designed to engage with each other and are equipped with downwardly open U-shaped tracks 11, intended for placing on a supporting rail (not shown) so that the grates 1 when placed adjacent to each other form an unbroken flooring surface. As can be understood, a number of the shown grates 1 may be laid down to form a flooring in which a connection is provided horizontally and vertically.

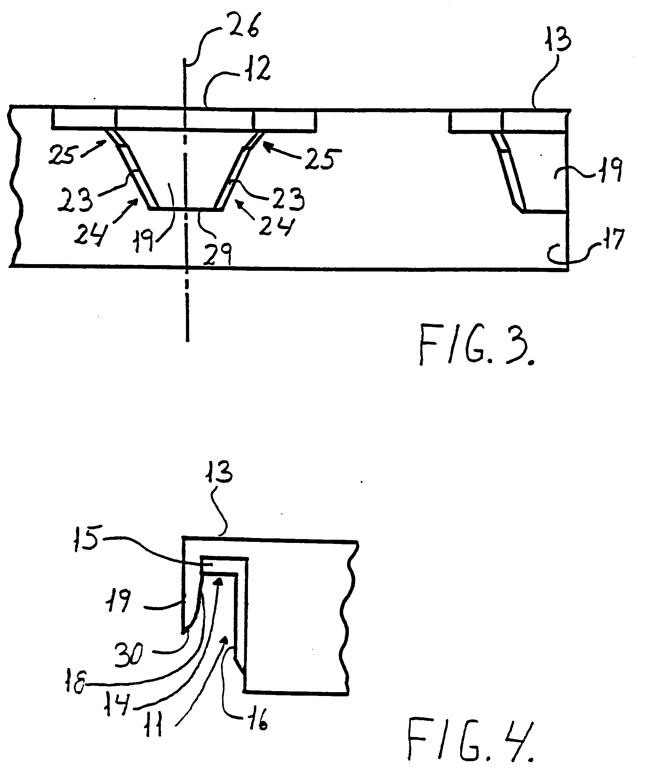

The toothings 9,10 consist of a number of identical teeth 12 which are offset from one another, and two teeth 13, which may be called tooth halves in a popular term, at either end of one lateral edge 8. Either of the U-shaped tracks is delimited by the under side 14 of the projecting tooth 12,13, said under side in the embodiment shown is formed on the under side of a supporting rib 15 placed under the tooth 12,13. The supporting rib 15 is connected with a downward orientated supporting rib 16 on the outside of the lateral wall 17 which delimits the frame or the grate 1. For the sake of simplicity, the ribs 16 are not shown in figs. 1 and 3. The downward tracks 11 are further delimited by the inner side 18 of the first lateral wall 19, which is connected with the tip 20 of the tooth and which is substantially perpendicular to the under side of the tooth. On the other side the track 11 is delimited by the upper side of the flanges 16 which project from the lateral walls 17 of the frame.

As appears most clearly from Fig. 3, the first lateral walls 19 in a direction parallel with the track 11 extend on the side of the tip 20 of the tooth. When two grates 1 are placed on a supporting rail to form a flooring, the surfaces 21 turning upward and extending beyond the tip 20 will be situated at the root 22 of each adjacent tooth 12,13 and will join the under side of the tooth 12, 13. Thus an unintended removal of a grate in the centre of a floor will be made impossible.

The projecting surfaces 21 will easily pass a root 22 of a tooth when the lateral edges 23 of a lateral wall 19 are designed with a downward tapering. The interlocking is particularly easy to establish when the downward tapering extends according to one angle at the lower portion 24 of the lateral wall and according to a different and wider angle at the upper portion 25 of the lateral wall. The angle is measured according to a vertical axis of symmetry 26 which passes through the lateral wall 19, and which defines at the same time a vertical plane of symmetry 27 through a tooth 12.

As it appears most clearly from Fig. 3 each of the lateral edges 23 will be inclined towards the centre at an angle which substantially corresponds to the angle which a tooth flange 28 forms with the plane of symmetry 27.

As it appears from Fig. 4, the first lateral wall 19's downward lateral edge 29 (see Fig. 3) is equipped with a bevelling 30 inclined towards the centre. This facilitates placing the grate 1 on a supporting rail.

The shown grate 1 may be produced by moulding a resin material in a very simple moulding form because a dividing line is established at the level which defines the contact surfaces 21 and which at the same time defines the under side of each tooth 12,13.

Although the frames described will primarily be produced from resin materials, it will also be possible to produce the grate in cast iron and obtain the same advantages of safe interlocking which prevents unintended removal of a grate which forms part of a flooring according to the invention.

## Claims

1. A flooring system, mainly for supports for farm animals in stables, consisting of plate-shaped frames (1), preferably grates, which have crossing longitudinal and transverse ribs (2,3), one pair of opposite lateral edges (4,5) of a frame (1) being equipped with horizontal connecting means (6), and the other pair of opposite lateral edges (7,8) being equipped with toothings (9,10) which are able to interact with corresponding toothings (9,10) on the lateral edge of an adjacent frame, and which toothing comprises a U-shaped track (11) pointing downwards for placing in a supporting rail so that the frames (1) are able, when placed adjacently, to form a flooring with an unbroken surface and at the same time are connected horizontally and vertically, **characterized** in that said downward track (11) is delimited by the under side (14) of each projected tooth (12,13) and two lateral walls (17,19), the first of which (19) consisting in a downward wall (18) which is connected to the tip (20) of each tooth and which is perpendicular to the tooth (12,13), and the second lateral wall (17) consisting in the lateral faces (17) of the frame (1) or in flanges (16) which are projecting from such a lateral face (17), and that said first lateral wall (19), at the end facing the tip of the tooth (20), extends beyond the tip of the tooth (20) in a direction parallel with the track (11).

2. A flooring system according to claim 1, **characterized** in that the first lateral wall (19) is tapered downwards, in the direction extending away from the tip of the tooth (12,13).

3. A flooring system according to claim 2, **characterized** in that the downward tapering extends according to one angle at the lower portion of the lateral wall (24) and according to a wider angle at the upper portion of the lateral wall (25) which joins the tip of the tooth, the angle being measured according to a vertical axis of symmetry (26) through the lateral wall (19).

4. A flooring system according to any one of the preceding claims, **characterized** in that each of the lateral edges (18) of the lateral wall (19) which extends downward from the sides of the tip of the tooth inclines in proportion to a plane of symmetry through the lateral wall so that said lateral wall (19) has a larger extension towards the track (11) than away from the track.

5. A flooring system according to any one of the preceding claims, **characterized** in that each tooth (12), as seen perpendicular to the surface of the flooring, tapers rectilinearly towards the tip of the tooth.

6. A flooring system according to any one of the preceding claims, **characterized** in that the frames (1) consist of moulded resins.

7. A flooring system according to any one of the preceding claims, **characterized** in that the under side (14) of each projected tooth (12,13) is tightened by ribs (15) which form the del imitation of the track (11).

8. A flooring system according to any one of the preceding claims, **characterized** in that the downward edge (29) of each first lateral wall (19) is bevelled (30) towards the track (11).

## Patentansprüche

1. Fußbodensystem, insbesondere für die Standfläche des Viehs in Ställen, bestehend aus plattenförmigen Formkörpern (1), vorzugsweise Rosten, die sich kreuzende Längs- und Querrippen (2, 3) aufweisen, ein Paar entgegengesetzter seitlicher Kanten (4, 5) des Formkörpers (1), die mit horizontalen Verbindungsmitteln (6) ausgerüstet sind und dem anderen Paar entgegengesetzter seitlicher Kanten (7, 8), die mit Verzahnungen (9, 10) ausgerüstet sind, welche in der Lage sind, mit entsprechenden Verzahnungen (9, 10) an der seitlichen Kante eines benachbarten Formkörpers zusammenzuwirken und eine U-förmige Spur (11) umfassen, die nach unten gerichtet ist, um auf einer Stützschiene angeordnet zu werden, so daß die Formkörper (1) bei Nebeneinanderanordnung einen Fußboden mit ununterbrochener Oberfläche bilden können und gleichzeitig horizontal und vertikal miteinander verbunden sind,
**dadurch gekennzeichnet,** daß die nach unten gerichtete Spur (11) durch die Unterseite (14) jedes vorspringenden Zahns (12, 13) und zwei seitliche Wände (17, 19) begrenzt ist, wobei der erstere (19) aus einer nach unten gerichteten Wand (18) besteht, die mit der Spitze (20) jedes Zahns verbunden ist und die sich senkrecht zu dem Zahn (12, 13) erstreckt, und wobei die zweite Seitenwand (17) durch die Seitenflächen (17) des Formkörpers (1) bzw. durch Flansche (16) gebildet ist, die sich von solch einer Seitenfläche (17) vorerstrecken und daß die fragliche erste Seitenwand an dem der Zahnspitze (20) zugewandten Ende über die Spitze des Zahns (20) in eine Richtung vorerstreckt, die parallel zur Spur (11) verläuft.

2. Fußbodensystem nach Anspruch 1 dadurch gekennzeichnet, daß die erste Seitenwand (19) in die sich von der Spitze des Zahns (12, 13) wegerstreckende Richtung nach unten spitz zulaufend ausgeführt ist.

3. Fußbodensystem nach Anspruch 2, dadurch gekennzeichnet, daß sich die nach unten gerichtete Verjüngung gemäß einem Winkel am unteren Abschnitt der Seitenwand 24 erstreckt und gemäß einem weiteren Winkel am oberen Abschnitt der Seitenwand 25, die sich an die Spitze des Zahns anschließt, wobei der Winkel gemäß einer vertikalen Symmetrieachse (26) durch die Seitenwand (19) gemessen wird.

4. Fußbodensystem nach einem der vorstehenden Ansprüche, dadurch gekennzeichnet, daß jede der seitlichen Kanten (18) der Seitenwand (19), die sich von den Seiten der Spitze des Zahns nach unten erstreckt, im Verhältnis zu einer Symmetrieebene durch die Seitenwand geneigt ist, so daß diese Seitenwand (19) zur Spur (11) hin eine größere Ausdehnung besitzt als von der Spur weg.

5. Fußbodensystem nach einem der vorstehenden Ansprüche, dadurch gekennzeichnet, daß jeder Zahn (12) bei Blickrichtung senkrecht zur Oberfläche des Fußbodens geradlinig zur Spitze des Zahns hin zusammenläuft.

6. Fußbodensystem nach einem der vorstehenden Ansprüche, dadurch gekennzeichnet, daß der Formkörper (1) aus geformtem Kunststoff besteht.

7. Fußbodensystem nach einem der vorstehenden Ansprüche, dadurch gekennzeichnet, daß die Unterseite (14) jedes vorstehenden Zahns (12, 13) durch Rippen (15) versteift ist, die eine Begrenzung der Spur (11) bilden.

8. Fußbodensystem nach einem der vorstehenden Ansprüche, dadurch gekennzeichnet, daß die nach unter gewandte Kante (29) jeder ersten Seitenwand (19) zur Spur (11) hin abgeschrägt (30) ist.

## Revendications

1. Système de plancher, principalement pour des supports pour des animaux de ferme dans des étables, constitué de châssis (1) en forme de plaque, de préférence des grilles, qui présentent des barres transversales et longitudinales (2,3) qui se croisent, une paire de bords latéraux opposés (4,5) d'un châssis (1) étant munie de moyens de liaison horizontaux (6) et l'autre paire de bords latéraux opposés (7,8) étant munie de dentures (9,10) qui peuvent interagir avec des dentures correspondantes (9,10) sur le bord latéral d'un châssis adjacent, et laquelle denture comprend un évidement en forme de U (11) pointant vers le bas pour le placement dans un rail de support, de sorte que les châssis (1) sont susceptibles, quand ils sont disposés de façon adjacente, de former un plancher ayant une surface ininterrompue et, en même temps, sont reliés horizontalement et verticalement,
caractérisé en ce que ledit évidement vers le bas (11) est délimité par le dessous (14) de chaque dent en saillie (12,13) et deux parois latérales (17,19), dont la première (19) est constituée d'une paroi inférieure (18) qui est reliée au bout (20) de chaque dent et qui est perpendiculaire à la dent (12,13), et dont la seconde paroi latérale (17) est constituée des faces latérales (17) du châssis (1) ou de rebords (16) qui font saillie d'une telle face latérale (17), et en ce que ladite première paroi latérale (19), à l'extrémité vis-à-vis du bout de la dent (20), s'étend au-delà du bout de la dent (20) dans une direction parallèle à l'évidement (11).

2. Système de plancher selon la revendication 1,
caractérisé en ce que la première paroi latérale (19) est effilée vers le bas dans la direction s'étendant au loin du bout de la dent (12,13).

3. Système de plancher selon la revendication 2,
caractérisé en ce que l'effilement vers le bas s'étend selon un angle au niveau de la partie inférieure de la paroi latérale (24) et selon un angle plus large au niveau de la partie supérieure de la paroi latérale (25) qui joint le bout de la dent, l'angle étant mesuré selon un axe vertical de symétrie (26) à travers la paroi latérale (19).

4. Système de plancher selon l'une quelconque des revendications précédentes,
caractérisé en ce que chacun des bords latéraux (18) de la paroi latérale (19) qui s'étend vers le bas à partir des côtés du bout de la dent est incliné en proportion d'un plan de symétrie à travers la paroi latérale de sorte que ladite paroi latérale (19) présente une extension plus grande vers l'évidement (11) qu'au loin de l'évidement.

5. Système de plancher selon l'une quelconque des revendications précédentes,
caractérisé en ce que chaque dent (12), vue perpendiculairement à la surface du plancher, est effilée de façon rectiligne vers le bout de la dent.

6. Système de plancher selon l'une quelconque des revendications précédentes,
caractérisé en ce que les châssis (1) sont constitués de résines moulées.

7. Système de plancher selon l'une quelconque des revendications précédentes,
caractérisé en ce que le dessous (14) de chaque dent en saillie (12,13) est renforcé par des barres (15) qui forment la délimitation de l'évidement (11).

8. Système de plancher selon l'une quelconque des revendications précédentes,
caractérisé en se que le bord inférieur (29) de chaque première paroi latérale (19) présente un chanfrein (30) vers l'évidement (11).
